# EUROPÄISCHE PATENTSCHRIFT

(11) **EP 3 615 963 B1**
(45) Veröffentlichungstag und Bekanntmachung des Hinweises auf die Patenterteilung: **09.07.2025**
(21) Anmeldenummer: 18719859.3
(22) Anmeldetag: 24.04.2018
(51) Int. Cl.: G01S 7/481, G01S 7/497, G01S 17/42, G01S 17/931, H05B 3/84

(54) **OPTISCHE ERFASSUNGSEINRICHTUNG FÜR EIN KRAFTFAHRZEUG, WOBEI ABHÄNGIG VON EINEM FUNKTIONSZUSTAND DES GEHÄUSES DER BETRIEB EINER LICHTQUELLENEINHEIT DURCHGEFÜHRT WIRD, VERFAHREN SOWIE KRAFTFAHRZEUG**
OPTICAL DETECTION DEVICE FOR MOTOR VEHICLE, WHEREIN THE OPERATION OF THE LIGHT SOURCE UNIT IS IMPLEMENTED DEPENDING ON A FUNCTIONAL STATE OF THE HOUSING, METHOD AND MOTOR VEHICLE
DISPOSITIF DE DÉTECTION OPTIQUE POUR UN VÉHICULE À MOTEUR, LE FONCTIONNEMENT D'UNE UNITÉ DE SOURCE LUMINEUSE S'EFFECTUANT EN FONCTION D'UN ÉTAT DE FONCTIONNEMENT DU BOÎTIER, PROCÉDÉ ET VÉHICULE À MOTEUR

(30) Priorität: 28.04.2017 DE 102017109138
(43) Veröffentlichungstag der Anmeldung: 04.03.2020
(73) Patentinhaber: Valeo Schalter und Sensoren GmbH, 74321 Bietigheim-Bissingen (DE)
(72) Erfinder: BUSSE, Gunnar, 74321 Bietigheim-Bissingen (DE); REICHERT, Andreas, 74321 Bietigheim-Bissingen (DE)
(74) Vertreter: Pothmann, Karsten
(86) Internationale Anmeldenummer: PCT/EP2018/060417
(87) Internationale Veröffentlichungsnummer: WO 2018/197452

(56) Entgegenhaltungen:
- WO-A1-2016/147759
- DE-A1- 102011 122 345
- DE-A1- 19 644 164
- DE-B3- 10 329 095
- US-A1- 2005 184 259
- US-A1- 2010 245 849

## Beschreibung

Die vorliegende Erfindung betrifft eine Optische Erfassungseinrichtung für ein Kraftfahrzeug. Es sind mit einer in einem Gehäuse der optischen Erfassungseinrichtung angeordneten Lichtquelleneinheit der optischen Erfassungseinrichtung Lichtstrahlen durch ein Gehäuseteil des Gehäuses aus dem Gehäuse in eine Umgebung des Kraftfahrzeugs aussendbar. Ferner betrifft die Erfindung ein Verfahren und ein Kraftfahrzeug.

Im vorliegenden Fall richtet sich das Interesse auf eine optische Erfassungseinrichtung für ein Kraftfahrzeug, insbesondere einen Laserscanner. Mittels der optischen Erfassungseinrichtung kann ein Umgebungsbereich des Kraftfahrzeugs überwacht werden. Dabei können Objekte in dem Umgebungsbereich des Kraftfahrzeugs erfasst werden und Informationen über das erfasste Objekt, beispielsweise geometrische Abmessungen des Objekts und ein Abstand des Objekts zum Kraftfahrzeug, einem Fahrerassistenzsystem bereitgestellt werden. Bei Laserscannern werden üblicherweise Lichtstrahlen, insbesondere ein Laserstrahl, des Laserscanners ausgesendet und über einen Umlenkspiegel in den Umgebungsbereich reflektiert. Das Licht wird an dem Objekt im Umgebungsbereich zurück zu dem Umlenkspiegel reflektiert und daraufhin erfasst. Der Umlenkspiegel ist dabei in der Regel drehbar gelagert und wird mittels einer Antriebseinrichtung zum Drehen um eine Drehachse angetrieben. Die Lichtstrahlen werden in verschiedene Abtastsenderichtungen abgelenkt und der Umgebungsbereich somit abgetastet beziehungsweise gescannt. Zumindest die Lichtquelleneinheit ist dabei insbesondere innerhalb eines Gehäuses der optischen Erfassungseinrichtung angeordnet.

Die DE 10 2014 114 363 A1 offenbart eine Fensterkappe für ein Gehäuse einer optoelektronischen Messvorrichtung. Um die Betriebsfähigkeit einer optoelektronischen Messvorrichtung unter kalten Witterungsbedingungen zu verbessern, ist es vorgesehen, die Fensterkappe mit einem für elektromagnetische Messstrahlen der Messvorrichtung transparenten Fenster und einer winklig zum Fenster ausgebildeten und eine umlaufende Kontur ausbildende Randwandung auszubilden. Die Fensterkappe ist auf einen umlaufenden Fensterrand des Gehäuses außen aufgeschoben und in einen dem Fensterrand überlappenden Abschnitt der Randwandung befestigt. Um Ablagerungen aus Witterungseinflüssen auf dem Gehäuse zu beseitigen wird eine Abdeckscheibe des Gehäuses indirekt über mindestens einen elektrischen Heizleiter beheizt. Insbesondere befindet sich die Heizeinrichtung im Wesentlichen im Bereich des Empfangsfensters. Bei der optischen Erfassungseinrichtung aus dem Stand der Technik kann es dazu kommen, dass bei einem geöffneten Gehäuse beziehungsweise bei einem Defekt des Gehäuses Lichtstrahlen, insbesondere mit einer erhöhten Leistung, der Lichtquelleneinheit aufgrund des geöffneten Gehäuses beziehungsweise des defekten Gehäuses unerwünscht wodurch sich bezüglich der undefiniert austretenden Lichtstrahlen sicherheitskritische Zustände ergeben können. Eine optische Messvorrichtung mit einem Gehäuse und einer Abdeckscheibe ist auch aus DE 10 2011 122345 A1 bekannt.

Aufgabe der vorliegenden Erfindung ist es eine optische Erfassungseinrichtung, ein Verfahren sowie ein Kraftfahrzeug zu schaffen, bei welchem beziehungsweise bei welcher sicherheitskritische Betriebszustände vermieden werden Diese Aufgabe wird durch eine optische Erfassungseinrichtung, ein Verfahren sowie ein Kraftfahrzeug gemäß den unabhängigen Ansprüchen gelöst.

Ein Aspekt der Erfindung betrifft eine optische Erfassungseinrichtung für ein Kraftfahrzeug. Die optische Erfassungseinrichtung ist zum Erfassen von Objekten in der Umgebung des Kraftfahrzeugs ausgebildet. Die optische Erfassungseinrichtung weist eine in einem Gehäuse der optischen Erfassungseinrichtung angeordnete Lichtquelleneinheit der optischen Erfassungseinrichtung auf, bei welcher Lichtstrahlen durch ein Gehäuseteil des Gehäuses aus dem Gehäuse in eine Umgebung des Kraftfahrzeugs aussendbar sind.

Die optische Erfassungseinrichtung weist eine Überprüfungseinheit auf, mittels welcher ein Funktionszustand des Gehäuses überprüfbar ist. Bei einem Erkennen eines von einem Referenz-Funktionszustand des Gehäuses abweichenden Ist-Funktionszustand des Gehäuses ist ein Steuersignal erzeugbar.

Dies hat den Vorteil, dass der Funktionszustand eines das Aussenden der Lichtstrahlen beeinflussenden Bauteils, nämlich des Gehäuses, überwacht wird. Ein beeinträchtigendes Aussenden ist insbesondere ein von einem Referenz-Aussenden abweichendes Aussenden. Insbesondere kann durch das Vergleichen des Referenz-Funktionszustands zum Ist-Funktionszustand der somit aktuelle Funktionszustand genau kategorisiert werden. Sollte dann der erkannte Funktionszustand nicht dem Referenz-Funktionszustand entsprechen, kann von einem Betriebszustand bezüglich dem Aussenden der Lichtstrahlen ausgegangen werden, der unerwünscht ist und zu sicherheitskritischen Situationen führen kann, insbesondere, wenn der richtungsmäßig nicht mehr definierte Lichtstrahlenaustritt auf eine Person trifft.

Insbesondere kann es sich bei dem Betrieb der Lichtquelleneinheit bei dem Erkennen des vom Referenz-Funktionszustand unerwünschte abweichenden Ist-Funktionszustands um einen definierten Notbetrieb handeln. Dieser Notbetrieb kann derart vorgegeben sein, dass sicherheitskritische Situation vermieden sind, insbesondere das Aussenden der Lichtstrahlen jedoch nicht ganz deaktiviert ist.

Bei dem Gehäuseteil kann es sich beispielsweise um eine transparente Scheibe handeln, durch welche die Lichtstrahlen in die Umgebung gesendet werden können und durch welche ein Aufnahmeraum der Erfassungseinrichtung, in dem optische Komponenten angeordnet sind, verschlossen ist, so dass diese Komponenten geschützt angeordnet sind.

Erfindungsgemäß ist mittels der Uberprüfungseinheit der Funktionszustand des Gehäuseteils überprüfbar und bei einem Erkennen eines dem Referenz-Funktionszustand des Gehäuseteils abweichenden Ist-Funktionszustand des Gehäuseteils ein Steuersignal erzeugbar. Insbesondere kann vorgesehen sein, dass bei dem Funktionszustand, welcher unterschiedlich zum Referenz-Funktionszustand beim Referenz-Aussenden ist, abhängig von dem Steuersignal die Lichtquelleneinheit betrieben wird. Hierbei ist es möglich, dass das Entfernen des Gehäuseteils von dem Gehäuse erkannt werden kann und entsprechend bei einem Entfernen des Gehäuses beziehungsweise bei einem Entfernen des Gehäuseteils die Lichtquelleneinheit entsprechend betrieben werden kann. Dadurch ist ein sicherer Betrieb der optischen Erfassungseinrichtung realisiert. Entsprechend ist dies dann auch möglich, wenn das Gehäuseteil einen beschränkten Zustand aufweist, der das Aussenden der Lichtstrahlen beeinträchtigt. Beispielsweise kann dies ein Bruch des Gehäuseteils oder ein Riss oder ein tiefer Kratzer sein.

Es hat sich weiterhin als vorteilhaft erwiesen, wenn ein vom Gehäuse abgenommenes Gehäuseteil ein vom Referenz-Funktionszustand abweichender Ist-Funktionszustand ist. Insbesondere kann vorgesehen sein, dass eine am Gehäuse angeordnete Kontaktfeder mit dem Gehäuseteil kontaktiert ist und sobald die Kontaktfeder nicht mehr mit dem Gehäuseteil kontaktiert ist, das Gehäuseteil als abgenommen erkannt wird. Dadurch kann beim Entfernen des Gehäuseteils zuverlässig der Ist-Funktionszustand erkannt werden. Wenn dann erkannt ist, dass das Gehäuseteil abgenommen wurde, kann die Lichtquelleneinheit entsprechend daran angepasst betrieben werden.

Es hat sich weiterhin als vorteilhaft erwiesen, wenn ein Bruch und/oder ein Riss und/oder ein tiefer Kratzer des Gehäuseteils ein vom Referenz-Funktionszustand abweichender Ist-Funktionszustand ist. Insbesondere können dann bereits auch kleine Beschädigungen des Gehäuseteils, beispielsweise durch Steinschlag oder witterungsbedingte Risse, bereits erkannt werden, die zu einer Beeinträchtigung des Aussendens der Lichtstrahlen führen könnten. Insbesondere ist es dadurch ermöglicht, dass die optische Erfassungseinrichtung noch sicherer betrieben werden kann.

Erfindungsgemäß weist das Gehäuse und/oder das Gehäuseteil zumindest bereichsweise zumindest ein in dem Gehäuse und/oder in dem Gehäuseteil integriertes elektrisch leitendes Element auf und durch Überprüfen des elektrischen Widerstands des elektrisch leitenden Elements wird ein Funktionszustand des Gehäuses erkennbar. Insbesondere ist vorgesehen, dass das elektrisch leitende Element das Aussenden der Lichtstrahlen nicht beeinträchtigt. Insbesondere kann das Gehäuse und/oder das Gehäuseteil großflächig mit dem elektrisch leitenden Element verbunden wird, wodurch eine umfängliche und multilokale Überprüfung des Funktionszustands realisiert werden kann. Insbesondere kann durch die Prüfung des elektrischen Widerstands ein genauer Rückschluss auf den Funktionszustand gezogen werden. Beispielsweise kann bei einem geringen elektrischen Widerstand davon ausgegangen werden, dass der Referenz-Funktionszustand vorliegt. Bei einem sehr hohen, insbesondere bei einem im Wesentlichen unendlich großen, elektrischen Widerstand kann darauf geschlossen werden, dass ein das Aussenden der Lichtstrahlen beeinträchtigender Ist-Funktionszustand vorliegt. Dies hat den Hintergrund darin, dass beispielsweise mit einem Riss und/oder Bruch des Gehäuseteils auch eine Riss und/oder Bruch des elektrisch leitenden Elements mit einhergeht. Bei einem Riss und/oder Bruch des elektrisch leitenden Elements weist dieses dann einen im Wesentlichen unendlich großen Widerstand auf. Dadurch kann besonders zuverlässig der Funktionszustand mit nur einem Element überprüft werden und somit auch eine sichere und bauteilreduziertere optische Erfassungseinrichtung realisiert werden.

Erfindungsgemäß ist das zumindest eine elektrisch leitende Element als ein Heizdraht einer Heizeinrichtung der optischen Erfassungseinrichtung ausgebildet. Insbesondere kann dann neben der Überprüfung des Funktionszustands das elektrisch leitende Element dazu ausgebildet sein, auch das Gehäuse und/oder das Gehäuseteil vor Ablagerungen aus Witterungseinflüssen zu befreien. Insbesondere kann beispielsweise ein mit Feuchtigkeit beschlagenes Gehäuseteil mittels der Heizeinrichtung von dem Beschlag befreit werden, wodurch die Lichtstrahlen zuverlässiger durch das Gehäuseteil ausgesendet werden können. Insbesondere kann dadurch mit dem elektrisch leitenden Element die Heizeinrichtung bereitgestellt werden und es kann mit dem elektrisch leitenden Element der Funktionszustand des Gehäuses und/oder des Gehäuseteils überprüft werden. Dadurch kann eine hochfunktionelle und bauteilreduzierte optische Erfassungseinrichtung bereitgestellt werden.

In einer vorteilhaften Ausgestaltungsform kann das elektrisch leitende Element mäanderförmig in das Gehäuse und/oder das Gehäuseteil integriert ist. Insbesondere durch die mäanderförmige Integration des elektrisch leitenden Elements kann das Gehäuse und/oder das Gehäuseteil großflächig auf den Funktionszustand überprüft werden. Des Weiteren kann durch die mäanderförmige Verteilung eine verbesserte Beheizung des Gehäuses und/oder das Gehäuseteils realisiert werden, sodass dadurch auch verbessert Ablagerungen aufgrund der Witterungseinflüsse beseitigt werden können. Dadurch kann eine verbesserte optische Erfassungseinrichtung bereitgestellt werden.

Insbesondere ist vorteilhaft, wenn beim Erkennen eines von dem Referenz-Funktionszustand zumindest des Gehäuseteils des Gehäuses abweichenden Ist-Funktionszustand ein Steuersignal erzeugbar ist, so dass die Lichtquelleneinheit ausgeschaltet ist oder nicht eingeschaltet ist. Mit anderen Worten, sollte die Lichtquelleneinheit bereits angeschaltet sein, so kann beim Erkennen dieses Ist-Funktionszustands die Lichtquelleneinheit vollständig ausgeschaltet werden. Sollte bereits vor einer Inbetriebnahme der Lichtquelleneinheit erkannt werden, dass dieser Ist-Funktionszustand vorliegt, so kann ein Einschalten der Lichtquelleneinheit verhindert werden. Insbesondere kann dadurch eine Person vor einem unerwünschten und richtungsmäßig nicht zu erwartenden Ausstrahlen durch die Lichtstrahlen der Lichtquelleneinheit geschützt werden.

Es hat sich weiterhin als vorteilhaft erwiesen, wenn beim Erkennen eines von dem Referenz-Funktionszustand zumindest des Gehäuseteils des Gehäuses abweichenden Ist-Funktionszustand ein Steuersignal erzeugbar ist, so dass die Lichtstrahlen mit im Vergleich zum Referenz-Funktionszustand reduzierter Leistung der Lichtquelleneinheit ausgesendet sind das Aussenden jedoch nicht vollständig deaktiviert ist. Insbesondere ist vorgesehen, dass die Leistung der Lichtquelleneinheit derart reduziert ist, dass eine Beeinträchtigung einer im Umfeld der Erfassungseinrichtung befindlichen Person vermieden ist. Dennoch ist ein weiterer aktiver Betrieb der Erfassungseinrichtung in gewissem Maße beziehungsweise eingeschränkt ermöglicht. Insbesondere kann dann beispielsweise der Erfassungsbereich der optischen Erfassungseinrichtung aufgrund der niedrigeren Leistung der Lichtquelleneinheit reduziert sein. Dennoch kann, insbesondere im Nahbereich des Kraftfahrzeugs, eine weitere Erfassung der Umgebung realisiert sein, sodass die optische Erfassungseinrichtung auch beim erkannten unerwünschten Ist-Funktionszustand weiterhin die Umgebung, beispielsweise in einem Notbetrieb, erfassen kann. Dadurch kann insbesondere auch bei erkannten, unerwünschten Ist-Funktionszustand die Umgebung weiter erfasst werden, ohne ein Person zu beeinträchtigen.

Es hat sich ebenfalls als vorteilhaft erwiesen, wenn der Funktionszustand bei einem Fahrbetrieb des Kraftfahrzeugs und/oder bei Stillstand des Kraftfahrzeugs überprüfbar ist, insbesondere überprüft ist. Insbesondere kann bei einem semi-autonomen Fahrbetrieb, insbesondere bei einem vollautonomen Betrieb, des Kraftfahrzeugs der Funktionszustand überprüft werden. Insbesondere kann auch bei einem Stillstand, beispielsweise vor einem Fahrtantritt des Kraftfahrzeugs der Funktionszustand überprüft werden. Insbesondere kann dadurch die optische Erfassungseinrichtung sowohl im Fahrbetrieb als auch im Stillstand bezüglich einer Gehäusebeeinträchtigung überprüft werden, sodass eine Beeinträchtigung einer Person bei beiden Betriebszuständen vermieden ist.

Gemäß einer vorteilhaften Ausgestaltungsform kann beim Eintritt des vom ReferenzZustand abweichenden Ist-Funktionszustands eine Funktionszustands-Information für eine Steuerungseinrichtung der optischen Erfassungseinrichtung und/oder des Kraftfahrzeugs, insbesondere eine Fehlermeldung, erzeugbar ist, insbesondere erzeugt ist. Insbesondere können dadurch beispielsweise weitere Schritte eingeleitet werden. Insbesondere kann beispielsweise vorgesehen sein, dass nach der Erzeugung der Funktionszustands-Information diese an eine kraftfahrzeugexterne Einrichtung gesendet wird. Beispielsweise kann es sich dabei um eine kraftfahrzeugexterne Einrichtung des Fahrzeugherstellers beziehungsweise eine Werkstatt handeln. Insbesondere kann dadurch eine schnellere Instandsetzung der optischen Erfassungseinrichtung realisiert werden.

Des Weiteren kann dadurch realisiert werden, dass beispielsweise das Fahrassistenzsystem, mittels welchen die optische Erfassungseinrichtung gekoppelt sein kann, die Funktionszustands-Information erfährt und dadurch beispielsweise andere Sensoren hinzuschaltet, um beispielsweise einen Defekt der optischen Erfassungseinrichtung zu kompensieren. Insbesondere in einem semi-autonomen Fahrbetrieb, insbesondere bei einem vollautonomen Fahrbetrieb, können dann weitere Manöver, insbesondere eine Reduzierung der Geschwindigkeit, veranlasst werden. Dadurch ist eine erhöhte Sicherheit auch bei beeinträchtigter beziehungsweise defekter optischer Erfassungseinrichtung realisiert.

Es hat sich weiterhin als vorteilhaft erwiesen, wenn die Funktionszustands-Information an einer Anzeigeeinheit eines Kraftfahrzeugs angezeigbar ist, insbesondere angezeigt ist. Insbesondere kann dann beispielsweise ein Insasse, insbesondere ein Fahrer, des Kraftfahrzeugs über den Funktionszustand der optischen Erfassungseinrichtung informiert werden. Insbesondere kann dann der Ausfall beziehungsweise das Ausschalten der optischen Erfassungseinrichtung dem Fahrer angezeigt werden. Ebenfalls möglich ist, dass dem Fahrer die Reduzierung der Leistung der ausgesendeten Lichtstrahlen angezeigt wird, sodass dieser beispielsweise über den eingeschränkten Erfassungsbereich bei reduzierter Leistung der ausgesendeten Lichtstrahlen in Kenntnis gesetzt wird. Dies hat den Vorteil, dass dadurch eine sicherere Führung des Kraftfahrzeugs durch den Fahrer realisiert ist.

Ebenfalls vorteilhaft ist, wenn der Funktionszustand des Gehäuses und/oder des Gehäuseteils mehrmals, insbesondere in vorbestimmten Zeitabständen, überprüfbar ist, insbesondere überprüft ist. Insbesondere kann dadurch beispielsweise in einem Fahrbetrieb des Kraftfahrzeugs mehrmals der Funktionszustand überprüft werden, sodass eine Änderung des Funktionszustands insbesondere von dem Referenz-Funktionszustand zu dem unerwünschten Ist-Funktionszustand frühzeitig erkannt wird, sodass die Möglichkeit einer Beeinträchtigung einer Person frühzeitig erkannt wird und mittels des erfindungsgemäßen Verfahrens eine Beeinträchtigung der Person vermindert wird.

Ferner betrifft die Erfindung ein Kraftfahrzeug mit einer optischen Erfassungseinrichtung. Das Kraftahrzeug ist insbesondere als Personenkraftwagen ausgebildet.

Ein weiterer Aspekt der Erfindung betrifft ein Verfahren zum Betreiben einer optischen Erfassungseinrichtung für ein Kraftfahrzeug. Die optische Erfassungseinrichtung weist zumindest eine in einem Gehäuse der optischen Erfassungseinrichtung angeordnete Lichtquelleneinheit der optischen Erfassungseinrichtung auf. Mittels der Lichtquelleneinheit werden Lichtstrahlen durch ein Gehäuseteil des Gehäuses hindurch aus dem Gehäuse in eine Umgebung des Kraftfahrzeugs ausgesendet. Mittels einer Überprüfungseinheit wird ein Funktionszustand des Gehäuses überprüft. Bei einem Erkennen eines von einem Referenz-Funktionszustand abweichenden Ist-Funktionszustand des Gehäuses wird ein Steuersignal erzeugt.

Die oben dargelegte optische Erfassungseinrichtung und das Kraftfahrzeug weisen dazu gegenständliche Merkmale auf, welche eine Durchführung des erfindungsgemäßen Verfahrens oder eine vorteilhafte Ausgestaltungsform davon ermöglichen.

Vorteilhafte Ausführungsformen der optischen Erfassungseinrichtung sind als vorteilhafte Ausführungsformen des Verfahrens sowie des Kraftfahrzeugs anzusehen.

Ausführungsbeispiele werden nachfolgend anhand von schematischen Zeichnungen erläutert.

Dabei zeigen:
- Fig. 1: ein Kraftfahrzeug gemäß einer Ausführungsform der Erfindung, welches eine optische Erfassungseinrichtung aufweist; und
- Fig. 2: eine schematische perspektivische Ansicht einer Ausführungsform einer optischen Erfassungseinrichtung.

In den Figuren sind gleiche sowie funktionsgleiche Elemente mit den gleichen Bezugszeichen versehen.

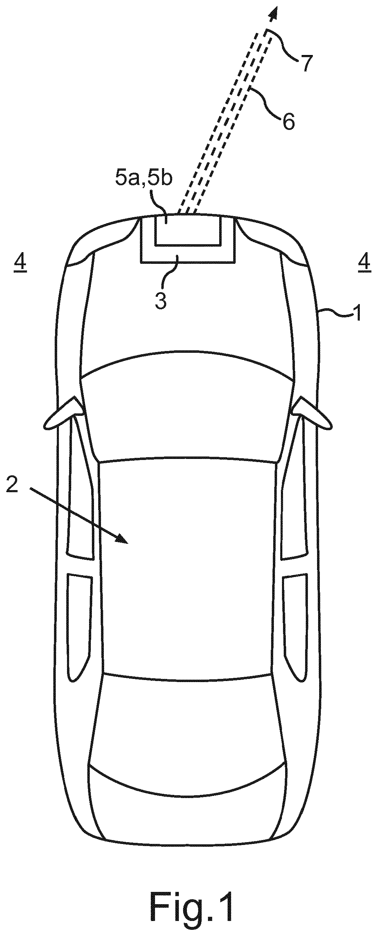

Fig. 1 zeigt ein Kraftfahrzeug 1 gemäß einer Ausführungsform der vorliegenden Erfindung. Das Kraftfahrzeug 1 ist im vorliegenden Fall als ein Personenkraftwagen ausgebildet. Das Kraftfahrzeug 1 umfasst ein Fahrerassistenzsystem 2, welches beispielsweise als ein Parkassistenzsystem ausgestaltet sein kann. Das Kraftfahrzeug 1 weist außerdem zumindest eine optische Erfassungseinrichtung 3, welche insbesondere als ein Laserscanner ausgestaltet ist, auf. Eine Position der optischen Erfassungseinrichtung 3 an dem Kraftfahrzeug 1 kann dabei vielfältig sein. Die optische Erfassungseinrichtung 3 wird zum Abtasten eines Umgebungsbereiches 4 des Kraftfahrzeugs 1 verwendet. Dabei werden von einer Sendeeinrichtung 5a der optischen Erfassungseinrichtung 3 erzeugte Lichtstrahlen 6 zu vorbestimmten Abtastzeitpunkten in zu den vorbestimmten Abtastzeitpunkten korrespondierende Abtastsenderichtungen 7 in den Umgebungsbereich 4 des Kraftfahrzeugs 1 ausgesendet. Die in dem Umgebungsbereich 4 reflektierten Lichtstrahlen 6 können Empfangseinrichtung 5b der optischen Erfassungseinrichtung 3 empfangen werden. Die von der optischen Erfassungseinrichtung 3 bereitgestellten Informationen über den Umgebungsbereich 4, beispielsweise ein Abstand oder geometrische Abmessungen eines Objektes in dem Umgebungsbereich 4, können dem Fahrerassistenzsystem 2 bereitgestellt werden.

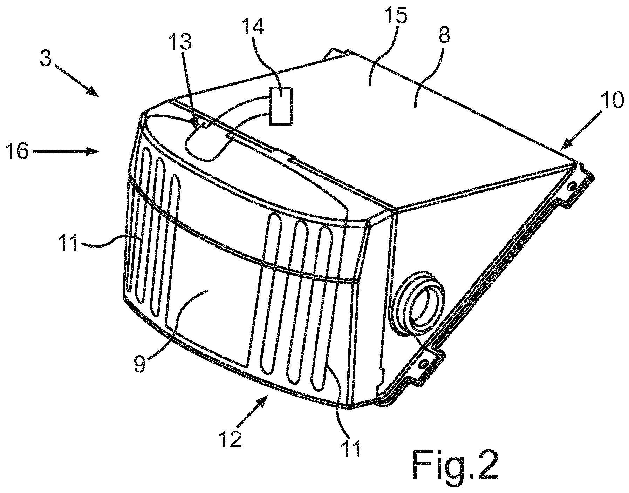

Fig. 2 zeigt eine schematische perspektivische Ansicht einer Ausführungsform der optischen Erfassungseinrichtung 3. Die optische Erfassungseinrichtung 3 weist ein Gehäuse 8 mit einem Gehäuseteil 9 auf. Innerhalb des Gehäuses 8 ist eine Lichtquelleneinheit 10 angeordnet. In einem Erfassungsmodus der optischen Erfassungseinrichtung 3 können die Lichtstrahlen 6 durch das Gehäuseteil 9 aus dem Gehäuse 8 in die Umgebung 4 des Kraftfahrzeugs 1 ausgesendet werden. Insbesondere kann dabei das Gehäuseteil 9 beispielsweise transparent ausgebildet sein. Das Gehäuseteil 9, welches insbesondere eine frontseitige Abdeckung ist, kann insbesondere abnehmbar ausgebildet sein, sodass das Gehäuseteil 9 vom restlichen Gehäusekörper 15 des Gehäuses 8 abnehmbar ist, um beispielsweise Zugang zu der Lichtquelleneinheit 10 zu erhalten.

Erfindungsgemäß ist vorgesehen, dass in dem Gehäusekörper 15 und/oder in dem Gehäuseteil 9 ein elektrisch leitendes Element 11 integriert ist. Vorliegend ist das elektrisch leitende Element 11 zumindest in dem Gehäuseteil 9 integriert. Erfindungsgemäß ist vorgesehen, dass das elektrisch leitende Element 11 als Teil einer Heizeinrichtung 12 der optischen Erfassungseinrichtung 3 ausgebildet ist. Insbesondere kann mittels der Heizeinrichtung 12 dann beispielsweise eine Beschlagung des Gehäuseteils 9 mit Feuchtigkeit aufgrund von Witterungsbedingungen beseitigt werden. Insbesondere ist das elektrisch leitende Element 11 der Heizeinrichtung 12 als Heizdraht mäanderförmig innerhalb des Gehäuses 8, insbesondere innerhalb des Gehäuseteils 9, verlegt. Insbesondere ist das elektrisch leitende Element 11 über eine Kontaktfeder 13 mit einer Steuerungseinrichtung 14 der optischen Erfassungseinrichtung elektrisch gekoppelt.

Es ist vorgesehen dass ein Funktionszustand des Gehäuses 8 mittels einer Überwachungseinheit 16 überprüfbar ist und überprüft wird. Bei einem Erkennen eines von einem Referenz-Funktionszustand abweichenden Ist-Funktionszustand des Gehäuses 8 wird ein Steuersignal für die Lichtquelleneinheit erzeugt wird. Insbesondere kann es sich bei dem dann durchgeführten Betrieb um einen sogenannten Notbetrieb der Lichtquelleneinheit 10 handeln, der auch nach dem Erkennen des unerwünschten Ist-Funktionszustand insbesondere unverzüglich eingestellt wird.

Erfindungsgemäß ist vorgesehen, dass der Funktionszustand des Gehäuseteils 9 mittels der Uberwachungseinheit 16 überprüfbar ist und überprüft wird und beim Erkennen eines und von einem Referenz-Funktionszustand abweichenden Ist-Funktionszustand des Gehäuseteils 9 ein Steuersignal für die Lichtquelleneinheit erzeugt wird. Insbesondere ist vorgesehen, dass beispielsweise mittels der Kontaktfeder 13, als Teil der Überwachungseinheit 16, erkannt werden kann, ob das Gehäuseteil 9 von dem Gehäuse 8 vollständig abgenommen wurde. Sollte beispielsweise das Gehäuseteil 9 von dem Gehäuse 8 abgenommen worden sein, so ist der Kontakt zwischen der Kontaktfeder 13 und der Steuerungseinrichtung 14 unterbrochen. Durch das Öffnen des Gehäuses 8 könnten die Lichtstrahlen 6 richtungsmäßig undefiniert ausgesendet werden und eine Person in der Umgebung 4, insbesondere die Augen der Person, aufgrund einer zu hohen Leistung der Lichtstrahlen 6, beeinträchtigen. Ebenfalls möglich ist, dass beispielsweise durch einen Bruch und/oder Riss des Gehäuseteils 9 ein undefiniertes Aussenden der Lichtstrahlen 6 erfolgt und eine Person beeinträchtigt werden könnte. Daher kann dann bei dem Erkennen des Ist-Funktionszustands vorgesehen sein, dass die Lichtquelleneinheit 10 vollständig deaktiviert wird. Sollte Lichtquelleneinheit 10 nicht eingeschaltet sein, so kann ein Einschalten der Lichtquelleneinheit 10 unterdrückt werden. Insbesondere kann ebenfalls vorgesehen sein, dass beim Erkennen des Ist-Funktionszustands die Lichtstrahlen 6 mit einer im Vergleich zum Referenz-Funktionszustand reduzierter Leistung der Lichtquelleneinheit 10 ausgesendet werden. Mit anderen Worten haben die Lichtstrahlen 6 eine geringere Energie als beim Referenz-Aussenden, sodass eine Beeinträchtigung der Person vermindert ist.

Erfindungsgemäß ist vorgesehen, dass der elektrische Widerstand des elektrischen Elements 11 erfasst wird, um abhängig davon den Funktionszustand der optischen Erfassungseinrichtung 3 zu überprüfen beziehungsweise zu kategorisieren. Insbesondere kann bei einem hohen elektrischen Widerstand, insbesondere bei einem im Wesentlichen unendlichen elektrischen Widerstand, der unerwünschte Ist-Funktionszustand, insbesondere mittels der Steuerungseinrichtung 14, erkannt werden. Insbesondere ist vorgesehen, dass der Funktionszustand bei einem Fahrbetrieb des Kraftahrzeugs 1 und/oder beim Stillstand des Kraftahrzeugs 1 überprüft wird. Somit kann insbesondere bei jeder Betriebsart des Kraftfahrzeugs 1 die Überprüfung der optischen Erfassungseinrichtung 3 durchgeführt werden. Insbesondere kann es sich bei dem Fahrbetrieb um einen semi-autonomen, insbesondere um einen vollautonomen, Fahrbetrieb handeln.

Erfindungsgemäß ist vorgesehen, dass bei Eintritt des unerwünschten Ist-Funktionszustands, also beispielsweise beim Entfernen des Gehäuseteils 9 von dem Gehäuse 8 oder bei einem Bruch und/oder Riss des Gehäuseteils 9, eine dazu charakterisierende Funktionszustands-Information für die Steuerungseinrichtung 14, insbesondere eine Fehlermeldung, erzeugt wird.

Die Steuerungseinrichtung 14 kann alternativ auch Teil des Fahrassistenzsystems 2 oder Teil des Kraftfahrzeugs 1 sein.

Insbesondere kann vorgesehen sein, dass die Funktionszustands-Information an einer Anzeigeeinheit des Kraftahrzeugs 1 angezeigt wird, sodass ein Insasse, insbesondere ein Fahrer, des Kraftfahrzeugs 1 über den Funktionszustand der optischen Erfassungseinrichtung 3 aktuell informiert wird.

Insbesondere kann weiter vorgesehen sein, dass der Funktionszustand des Gehäuses 8 und/oder des Gehäuseteils 9 mehrmals, insbesondere in vorbestimmten Zeitabständen überprüft wird. Dadurch kann insbesondere der Funktionszustand dauerhaft überwacht werden, wodurch eine Beeinträchtigung einer Person vermindert ist.

In vorteilhafter Weise kann die Art des Notbetriebs abhängig von der Art des unerwünschten Ist-Funktionszustands eingestellt werden. Beispielsweise kann als erste Art des Notbetriebs ein vollständiges Verhindern eines Aussendens von Lichtstrahlen 6 erfolgen, wenn das Gehäuseteil 9 abgenommen ist oder wenn ein Bruch oder ein Riss des Gehäuseteils 9 in einem Hauptbereich des Gehäuseteils 9 erfolgt ist, durch welchen das Aussenden der Lichtstrahlen 6 hauptsächlich erfolgt. Als beispielsweise zweite Art des Notbetriebs kann ein aktives Aussenden der Lichtstrahlen 6 mit reduzierter Lichtleistung ausgebildet sein. Dies kann bei kleinen Beeinträchtigungen des Gehäuseteils 9 der Fall sein, die beispielsweise am Rand aufgetreten sind und durch welche die Lichtstrahlen 6 nicht hauptsächlich hindurchgesendet werden.

## Patentansprüche

1. Optische Erfassungseinrichtung (3) für ein Kraftfahrzeug (1), mit einem Gehäuse (8) der optischen Erfassungseinrichtung (3), in welchem eine Lichtquelleneinheit (10) der optischen Erfassungseinrichtung (3) angeordnet ist, wobei mittels der Lichtquelleneinheit (10) Lichtstrahlen (6) durch ein Gehäuseteil (9) des Gehäuses (8) in eine Umgebung (4) des Kraftfahrzeugs (1) aussendbar sind,
wobei die optische Erfassungseinrichtung (3) eine Überprüfungseinheit (16) aufweist, mittels welcher ein Funktionszustand des Gehäuses (8) überprüfbar ist, und bei einem Erkennen eines von einem Referenz-Funktionszustand des Gehäuses (8) abweichenden Ist-Funktionszustands des Gehäuses (8) ein Steuersignal erzeugbar ist, wobei
das Gehäuse (8) und/oder das Gehäuseteil (9) zumindest bereichsweise zumindest ein in dem Gehäuse (8) und/oder in dem Gehäuseteil (9) integriertes elektrisch leitendendes Element (11) aufweist und durch Überprüfen des elektrischen Widerstands des elektrisch leitenden Elements (11) der Funktionszustand erkennbar ist und wobei
das zumindest eine elektrisch leitende Element (11) als ein Heizdraht einer Heizeinrichtung (12) der optischen Erfassungseinrichtung (3) ausgebildet ist, wobei mittels der Überprüfungseinheit (16) der Funktionszustand des Gehäuseteils (9) überprüfbar ist und bei einem Erkennen eines von dem Referenz-Funktionszustand des Gehäuseteils (9) abweichenden Ist-Funktionszustands des Gehäuseteils (9) ein Steuersignal erzeugbar ist und ein vom Gehäuse (8) abgenommenes Gehäuseteil (9) und/oder ein Bruch und/oder ein Riss des Gehäuseteils (9) ein vom Referenz-Funktionszustand abweichender Ist-Funktionszustand ist.

2. Optische Erfassungseinrichtung (3) nach Anspruch 1, wobei das elektrisch leitende Element (11) mäanderförmig in das Gehäuse (8) und/oder das Gehäuseteil (9) integriert ist.

3. Optische Erfassungseinrichtung (3) nach einem der vorhergehenden Ansprüche, wobei bei einem Erkennen eines von dem Referenz-Funktionszustand zumindest des Gehäuseteils (9) des Gehäuses (8) abweichenden Ist-Funktionszustands ein Steuersignal erzeugbar ist, so dass die Lichtquelleneinheit (10) ausgeschaltet ist oder nicht eingeschaltet ist.

4. Optische Erfassungseinrichtung (3) nach Anspruch 1, wobei bei einem Erkennen eines von dem Referenz-Funktionszustand zumindest des Gehäuseteils (9) des Gehäuses (8) abweichenden Ist-Funktionszustands ein Steuersignal erzeugbar ist, so dass die Lichtstrahlen (6) mit reduzierter Leistung der Lichtquelleneinheit (10) ausgesendet sind.

5. Optische Erfassungseinrichtung (3) nach einem der vorhergehenden Ansprüche, wobei der Funktionszustand bei einem Fahrbetrieb des Kraftfahrzeugs (1) und/oder bei Stillstand des Kraftfahrzeugs (1) überprüfbar ist.

6. Optische Erfassungseinrichtung (3) nach einem der vorhergehenden Ansprüche, wobei beim Eintritt des vom Referenz-Funktionszustand abweichenden Ist-Funktionszustands eine Funktionszustands-Information für eine Steuerungseinrichtung (14) der optischen Erfassungseinrichtung (3) und/oder des Kraftfahrzeugs (1), insbesondere eine Fehlermeldung, erzeugbar ist.

7. Optische Erfassungseinrichtung (3) nach Anspruch 6, wobei die Funktionszustands-Information an einer Anzeigeeinheit des Kraftfahrzeugs (1) angezeigbar ist.

8. Optische Erfassungseinrichtung (3) nach einem der vorhergehenden Ansprüche, wobei der Funktionszustand des Gehäuses (8) und/oder des Gehäuseteils (9) mehrmals, insbesondere in vorbestimmten Zeitabständen, überprüfbar ist.

9. Kraftfahrzeug (1) mit einer optischen Erfassungseinrichtung (3) nach einem der Ansprüche 1 bis 8.

10. Verfahren zum Betreiben einer optischen Erfassungseinrichtung (3) für ein Kraftfahrzeug (1), bei welchem mit einer in einem Gehäuse (8) der optischen Erfassungseinrichtung (3) angeordneten Lichtquelleneinheit (10) der optischen Erfassungseinrichtung (3) Lichtstrahlen (6) durch ein Gehäuseteil (9) des Gehäuses (8) aus dem Gehäuse (8) in eine Umgebung (4) des Kraftfahrzeugs (1) ausgesendet werden können,
wobei ein Funktionszustand des Gehäuses (8) mittels einer Überprüfungseinheit (16) überprüft wird und bei einem Erkennen eines von einem Referenz-Funktionszustand abweichenden Ist-Funktionszustands des Gehäuses (8) ein Steuersignal erzeugt wird, wobei
das Gehäuse (8) und/oder das Gehäuseteil (9) zumindest bereichsweise zumindest ein in dem Gehäuse (8) und/oder in dem Gehäuseteil (9) integriertes elektrisch leitendendes Element (11) aufweist und durch Überprüfen des elektrischen Widerstands des elektrisch leitenden Elements (11) der Funktionszustand erkannt wird und wobei
das zumindest eine elektrisch leitende Element (11) als ein Heizdraht einer Heizeinrichtung (12) der optischen Erfassungseinrichtung (3) ausgebildet ist, wobei mittels der Überprüfungseinheit (16) der Funktionszustand des Gehäuseteils (9) überprüft wird und bei einem Erkennen eines von dem Referenz-Funktionszustand des Gehäuseteils (9) abweichenden Ist-Funktionszustands des Gehäuseteils (9) ein Steuersignal erzeugt wird und ein vom Gehäuse (8) abgenommenes Gehäuseteil (9) und/oder ein Bruch und/oder ein Riss des Gehäuseteils (9) ein vom Referenz-Funktionszustand abweichender Ist-Funktionszustand ist.

## Claims

1. Optical acquisition device (3) for a motor vehicle (1), having a housing (8) of the optical acquisition device (3), in which a light source unit (10) of the optical acquisition device (3) is arranged, wherein light beams (6) can be emitted by means of the light source unit (10) through a housing part (9) of the housing (8) into surroundings (4) of the motor vehicle (1),
wherein the optical acquisition device (3) comprises a checking unit (16), by means of which a functional state of the housing (8) is checkable, and if an actual functional state of the housing (8) deviating from a reference functional state of the housing (8) is detected, a control signal can be generated, wherein
the housing (8) and/or the housing part (9) at least regionally comprises at least one electrically conductive element (11) integrated into the housing (8) and/or into the housing part (9) and the functional state is detectable by checking the electrical resistance of the electrically conductive element (11) and wherein
the at least one electrically conductive element (11) is formed as a heating wire of a heating unit (12) of the optical acquisition device (3), wherein the functional state of the housing part (9) is checkable by means of the checking unit (16), and if an actual functional state of the housing part (9) deviating from a reference functional state of the housing part (9) is detected, a control signal can be generated, and a housing part (9) removed from the housing (8) and/or a fracture and/or a crack of the housing part (9) is an actual functional state deviating from the reference functional state.

2. Optical acquisition device (3) according to Claim 1,
wherein the electrically conductive element (11) is integrated in a meandering shape into the housing (8) and/or the housing part (9).

3. Optical acquisition device (3) according to either of the preceding claims,
wherein if an actual functional state deviating from the reference functional state of at least the housing part (9) of the housing (8) is detected, a control signal can be generated, so that the light source unit (10) is switched off or is not switched on.

4. Optical acquisition device (3) according to Claim 1,
wherein if an actual functional state deviating from the reference functional state of at least the housing part (9) of the housing (8) is detected, a control signal can be generated, so that the light beams (6) are emitted having reduced power of the light source unit (10).

5. Optical acquisition device (3) according to any of the preceding claims,
wherein the functional state is checkable in a driving mode of the motor vehicle (1) and/or at a standstill of the motor vehicle (1).

6. Optical acquisition device (3) according to any of the preceding claims,
wherein upon occurrence of the actual functional state deviating from the reference functional state, an item of functional state information can be generated for a control unit (14) of the optical acquisition device (3) and/or the motor vehicle (1), in particular an error message.

7. Optical acquisition device (3) according to Claim 6,
wherein the item of functional state information is displayable on a display unit of the motor vehicle (1).

8. Optical acquisition device (3) according to any of the preceding claims,
wherein the functional state of the housing (8) and/or the housing part (9) is checkable multiple times, in particular at predetermined time intervals.

9. Motor vehicle (1) having an optical acquisition device (3) according to any of Claims 1 to 8.

10. Method for operating an optical acquisition device (3) for a motor vehicle (1), in which light beams (6) can be emitted through a housing part (9) of a housing (8) from the housing (8) into surroundings (4) of the motor vehicle (1) using a light source unit (10) of the optical acquisition device (3) arranged in the housing (8) of the optical acquisition device (3),
wherein a functional state of the housing (8) is checked by means of a checking unit (16) and a control signal is generated if an actual functional state of the housing (8) deviating from a reference functional state is detected, wherein
the housing (8) and/or the housing part (9) at least regionally comprises at least one electrically conductive element (11) integrated into the housing (8) and/or into the housing part (9) and the functional state is detected by checking the electrical resistance of the electrically conductive element (11) and wherein
the at least one electrically conductive element (11) is formed as a heating wire of a heating unit (12) of the optical acquisition device (3), wherein the functional state of the housing part (9) is checked by means of the checking unit (16), and if an actual functional state of the housing part (9) deviating from the reference functional state of the housing part (9) is detected, a control signal is generated, and a housing part (9) removed from the housing (8) and/or a fracture and/or a crack of the housing part (9) is an actual functional state deviating from the reference functional state.

## Revendications

1. Dispositif de détection optique (3) pour un véhicule à moteur (1), comprenant un boîtier (8) du dispositif de détection optique (3), dans lequel est agencée une unité (10) source de lumière du dispositif de détection optique (3), des rayons de lumière (6) étant aptes à être émis dans l'environnement (4) du véhicule (1) au moyen de l'unité (10) source de lumière à travers une partie (9) du boîtier (8),
le dispositif de détection optique (3) présentant une unité de contrôle (16) au moyen de laquelle l'état fonctionnel du boîtier (8) peut être vérifié, et, en cas de détection d'un état fonctionnel réel du boîtier (8) s'écartant d'un état fonctionnel de référence du boîtier (8), un signal de commande étant apte à être généré,
le boîtier (8) et/ou la partie (9) de boîtier présentent au moins par endroits au moins un élément (11) électriquement conducteur intégré dans le boîtier (8) et/ou dans la partie (9) de boîtier, et l'état fonctionnel est apte à être déterminé en vérifiant la résistance électrique de l'élément (11) électriquement conducteur, et
ledit au moins un élément (11) électriquement conducteur est conçu sous la forme d'un fil chauffant d'un dispositif de chauffage (12) du dispositif de détection optique (3), l'état fonctionnel de la partie (9) de boîtier étant apte à être vérifié au moyen de l'unité de contrôle (16) et, en cas de détection d'un état fonctionnel réel de la partie (9) de boîtier s'écartant de l'état fonctionnel de référence de la partie (9) de boîtier, un signal de commande étant apte à être généré, et une partie (9) de boîtier retirée du boîtier (8) et/ou une rupture et/ou une fissure de la partie (9) de boîtier étant un état fonctionnel réel différent de l'état fonctionnel de référence.

2. Dispositif de détection optique (3) selon la revendication 1,
dans lequel l'élément (11) électriquement conducteur est intégré selon une forme sinueuse dans le boîtier (8) et/ou la partie (9) de boîtier.

3. Dispositif de détection optique (3) selon l'une des revendications précédentes,
dans lequel, en cas de la détection d'un état fonctionnel réel différent de l'état fonctionnel de référence d'au moins la partie boîtier (9) du boîtier (8), un signal de commande est apte à être généré, de sorte que la source de lumière (10) soit éteinte ou ne soit pas allumée.

4. Dispositif de détection optique (3) selon la revendication 1,
dans lequel, lorsqu'un état fonctionnel réel différent de l'état fonctionnel de référence d'au moins la partie boîtier (9) du boîtier (8) est détecté, un signal de commande est apte à être généré, de sorte que les rayons de lumière (6) soient émis avec une puissance réduite par l'unité (10) formant source de lumière.

5. Dispositif de détection optique (3) selon l'une des revendications précédentes,
dans lequel l'état fonctionnel est apte à être vérifié pendant le fonctionnement du véhicule à moteur (1) et/ou lorsque le véhicule à moteur (1) est à l'arrêt.

6. Dispositif de détection optique (3) selon l'une des revendications précédentes,
dans lequel, lors de l'apparition de l'état fonctionnel réel s'écartant de l'état fonctionnel de référence, une information d'état fonctionnel est apte à être générée pour un dispositif de commande (14) du dispositif de détection optique (3) et/ou du véhicule à moteur (1), en particulier un message de défaillance.

7. Dispositif de détection optique (3) selon la revendication 6,
dans lequel l'information sur l'état fonctionnel est apte à être affichée sur une unité d'affichage du véhicule à moteur (1).

8. Dispositif de détection optique (3) selon l'une des revendications précédentes,
dans lequel l'état fonctionnel du boîtier (8) et/ou de la partie (9) de boîtier est apte à être vérifié plusieurs fois, en particulier à des intervalles de temps prédéterminés.

9. Véhicule à moteur (1) équipé d'un dispositif de détection optique (3) selon l'une des revendications 1 à 8.

10. Procédé pour faire fonctionner un dispositif de détection optique (3) pour un véhicule à moteur (1), dans lequel des rayons de lumière (6) sont aptes à être émis hors du boîtier (8) dans un environnement (4) du véhicule à moteur (1), par une unité (10) formant source de lumière du dispositif de détection optique (3), agencée dans un boîtier (8) du dispositif de détection optique (3), à travers une partie (9) du boîtier (8),
un état fonctionnel du boîtier (8) étant vérifié au moyen d'une unité de contrôle (16) et, en cas de détection d'un état fonctionnel réel du boîtier (8) s'écartant d'un état fonctionnel de référence, un signal de commande étant généré,
le boîtier (8) et/ou la partie (9) de boîtier présente au moins par endroits au moins un élément (11) électriquement conducteur intégré dans le boîtier (8) et/ou dans la partie (9) de boîtier, et l'état fonctionnel est détecté en vérifiant la résistance électrique de l'élément (11) électriquement conducteur, et
ledit au moins un élément (11) électriquement conducteur est conçu sous la forme un fil chauffant d'un dispositif de chauffage (12) du dispositif de détection optique (3), l'état fonctionnel de la partie (9) de boîtier étant vérifié au moyen de l'unité de contrôle (16) et, en cas de détection d'un état fonctionnel réel de la partie (9) de boîtier s'écartant de l'état fonctionnel de référence de la partie (9) de boîtier, un signal de commande étant généré, et une partie (9) de boîtier retirée du boîtier (8) et/ou une rupture et/ou une fissure de la partie (9) de boîtier étant un état fonctionnel réel différent de l'état fonctionnel de référence.
